Europäisches Patentamt

European Patent Office

Office européen des brevets

(11) Publication number: **0 334 234**
**A2**

## (12) EUROPEAN PATENT APPLICATION

(21) Application number: **89104824.1**

(22) Date of filing: **17.03.89**

(51) Int. Cl.⁴: **G01K 13/02** , **G01K 7/22**

(30) Priority: **19.03.88 JP 35816/88 U**

(43) Date of publication of application:
**27.09.89 Bulletin 89/39**

(84) Designated Contracting States:
**DE FR GB IT SE**

(71) Applicant: **SANDEN CORPORATION**
**20 Kotobuki-cho**
**Isesaki-shi Gunma, 372(JP)**

(72) Inventor: **Tamura, Yasuji**
**803-27 Iwamatsu**
**Ojima-machi Nitta-gun Gunma, 370-04(JP)**

(74) Representative: **Prüfer, Lutz H., Dipl.-Phys.**
**Harthauser Strasse 25d**
**D-8000 München 90(DE)**

(54) A thermosensor used for an automotive air conditioning system.

(57) A thermosensor used for an automotive air conditioning sysaem is disclosed. The thermosensor disposed in a rear side space of an instrument panel of an automobile comprises a casing having an passage and fans driven by a motor. The fans suck air in a passenger compartment to the passage to be sensed by a thermistor disposed in the passage. A circuit board disposing a conductive member on one surface thereon couples the thermistor and one terminal of lead wire connected to a controlling apparatus. The conductive member on one surface of the circuit board is effectively exposed to air in the passenger compartment in order to reduce unnecessary thermal influence from air in the rear side space of the instrument panel thereby the thermistor can sense temperature of air in the passenger compartment exactly.

Fig. 2

# A THERMOSENSOR USED FOR AN AUTOMOTIVE AIR CONDITIONING SYSTEM

The present invention generally relates to an automotive air conditioning system, more particularly, to a thermosensor used for an automotive air conditioning system.

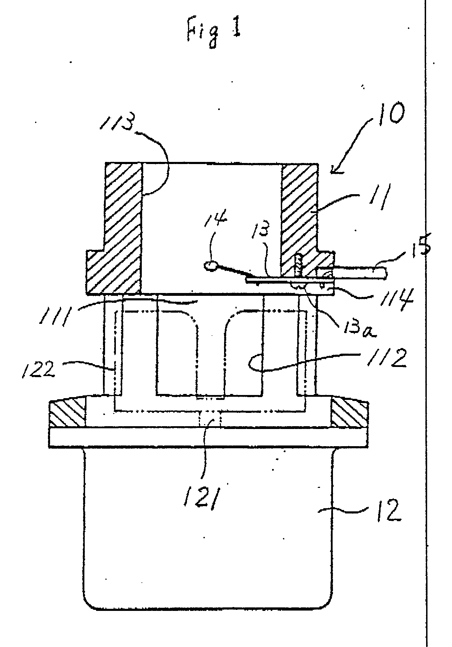

In Japanese Utility Model Application No.60-188617, a thermosensor used for an automotive air conditioning system is disclosed. With reference to Figure 1,the thermosensor 10 disclosed therein includes casing 11 and fan motor 12 having drive shaft 121 and a plurality of fans 122 fixed to drive shaft 121. Chamber 111 having a plurality of opening 112 is formed at a lower portion (in Figure 1) of casing 11. Passage 113 linking an outside of casing 11 to chamber 111 is formed at an upper portion (in Figure 1) of casing 11. Fan motor 12 is attached to a lower end of casing 11 in order to dispose fans 122 within chamber 111. Thermosensor 10 is disposed at a rear side of an instrument panel (not shown) of the automotive. An aperture (not shown) is formed at the instrument panel to link a passenger compartment to passage 113.

In operation, when fan motor 12 rotates, air in the passenger compartment flows into passage 113 through the aperture and flows to chamber 111 then flows to the outside of casing 11 through openings 112 due to aspiration of fans 122. Above mentioned air flow is maintained during fan motor 12 rotating.

Circuit board 13 coupling a terminal of thermo-detecting element 14 to one terminal of lead wire 15 of which another terminal connects to a controlling apparatus (not shown) of the automotive air conditionig system is fixedly disposed at cut- out portion 114 formed at an outward of the lower end of casing 11 by screw 13a. Thereby, thermo-detecting element 14 is disposed at a radial center of passage 113.

Furthermore, between air in the passenger compartment and air in the rear side space of the instrument panel, temperature difference exists even if an air conditioning becomes a stable stage due to defective convection between the passenger compartment and the rear side space of the instrument panel. Accordingly, in the prior art, thermo-detecting element 14 is disposed at the radial center of passage 113 to be sufficiently exposed in the air drawn from the passenger compartment by fans 122 thereby the temperature of passenger compartment air can be sensed exactly be thermo-detecting element 14. However, in the prior art, circuit board 13 is not sufficiently exposed to the air drawn from the passenger compartment so that a temperature of circuit board 13 is maintained to have different value with the temperature of passenger compartment air. In result, thermo-detecting element 14 can not sense the temperature of passenger compartment air exactly due to recieving a thermal influence of circuit board 13.

It is an object of the invention to provide a thermosensor used for an automotive air coditioning system sensing temperature of a passenger compartment air without unnecessary thermal influence of each element thereof.

The thermosensor used for the automotive air conditioning system comprises a casing, a thermo-detecting element and a circuit board. The casing inlcudes a passage and a fan drawing air from the passenger compartment to the passage. The thermo-detecting element is disposed within the passage. The circuit board couples a terminal of the thermo-detecting element to one terminal of a lead wire of which another terminal connects to a controlling apparatus of the automotive air conditioning system and comprises a conductive member disposed on one surface thereof. The circuit board is disposed at the casing to expose at least the one surface thereof to the passenger compartment air in the passage.

Figure 1 is a side elevation partly in section of a thermosensor in accordance with a prior art.

Figure 2 is an elevation of a thermosensor in accordance with one embodiment of thr present invention.

Figure 3 is a side elevation partly in section of a thermosensor in accordance with one embodiment of the present invention. In the drawing, a circuit board coupling a thermo-detecting element to a lead wire is detached from a casing of the thermosensor.

Figure 4 is an enlarged perspective view of the circuit board shown in Figure 3.

Figure 5 is an exploded perspective view of the thermosensor shown in Figure 3.

Figure 6 is a view similar to Figure 3. In the drawing, the thermosensor is attached to a rear side surface of an instrument panel of an automotive.

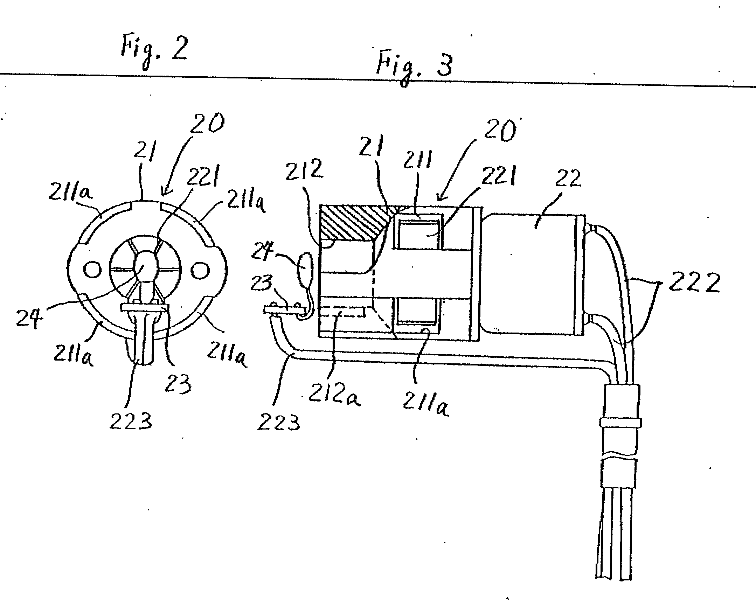

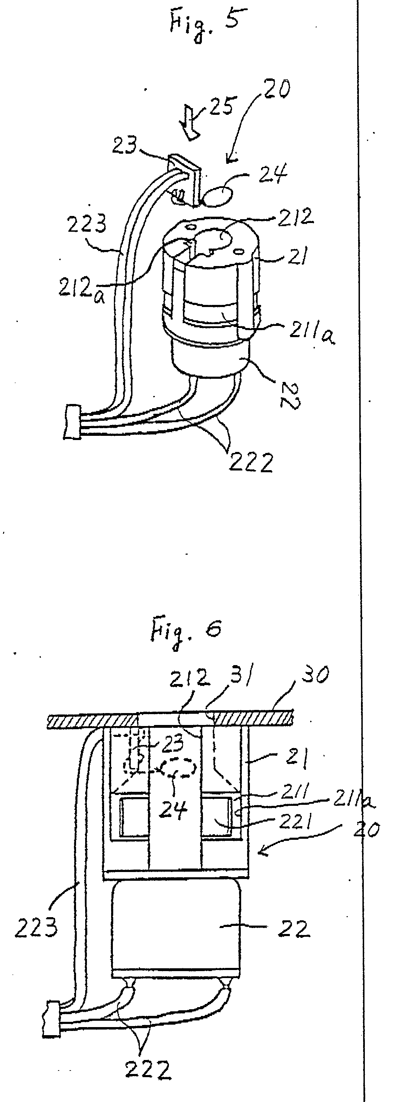

With reference to Figures 2 and 3, thermosensor 20 in accordance with one embodiment of the present invention is shown. Thermosensor 20 comprises cyclindrical casing 21 and fan motor 22 having a plurality of fans 221. Chamber 211 for disposing fans 221 is formed at a rear portion (right hand side in Figure 3) of casing 21. Passage 212 linking chamber 211 to an outside of casing 21 is formed at a front portion (left hand side in Figure 3) of casing 21. A plurality of opening 211a are formed at a peripheral wall of the rear portion of casing 21. Fans 221 disposed within chamber 211 are fixedly secured to a drive shaft (not shown) of fan motor 22. One terminal of lead wires 222 of which another terminal are connected to a switch (not shown) of an automotive air conditioning system are connected to fan motor 22. With reference to Figure 6, thermosensor 20 is fixedly disposed at a rear side of instrument panel 30 of a passenger compartment. Aperture 31 is formed at instrument panel 30 to link the passenger compartment to passage 212.

In operation when fan motor 22 rotates, air in the passenger compartment flows into passage 212 through aperture 31 and flows to chamber 211, then flows to the outside of casing 21 through opening 211a due to aspiration of fans 221. Abovementioned air flow is maintained during fan motor 22 rotating.

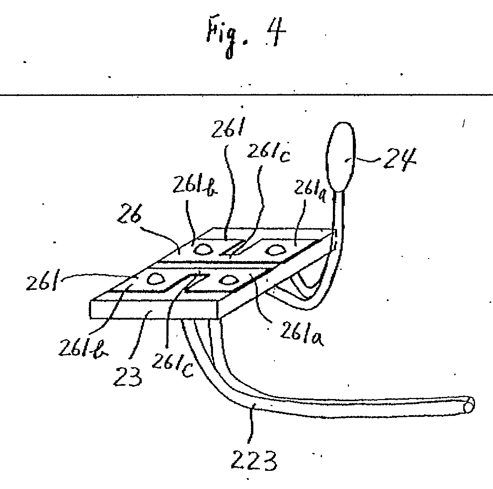

Hollow portion 212a the transverse section of which is rectangularly formed at the bottom of passage 212 to detachably and slidably secure circuit board 23 of resin member. With reference to Figure 4, circuit board 23 includes conductive member 26, for example, copper extendedly attached to one surface thereof and couples a terminal of thermistor 24 as a thermo-detecting element to one terminal of lead wire 223 of which another terminal connects to the controlling apparatus. Above terminals are attached to the conductive member by soldering.

With reference to Figure 5, circuit board 23 is slidingly inserted into hollow portion 212a as arrow 25 indicates in order to face the one surface thereof to passage 212 also to locate thermistor 24 at a radial center of passage 212. Accordingly, conductive member 26 attached to the one surface of circuit board 23 can be sufficiently expose to air in passage 212 so that temperature of circuit board 23, especially temperature of coductive member 26, can be easily equilibrated to the air in passage 212 even if temperature difference exists between the air in the passenger compartment and the air in the rear space of instrument panel 30. Thereby, thermistor 24 can sense temperature of the passenger compartment air without unnecessary thermal influence of circuit board 23.

After inserting circuit board 23 into hollow portion 212a, thermosensor 20 is fixedly secured to a rear surface of instrument panel 30 to prevent a axial moving of circuit board 23 as shown in Figure 6. Therefore, thermistor 24 can be fixedly disposed in hollow portion 212a without a fastener member, for example, a screw.

Furthermore, with reference to Figure 4, conductive member 26 includes a pair of conductive foils 261 having two large area portion 261a, 261b and small area portion 261c connecting therebetween. Each large area portion 261a of conductive foils 261 is connected to a pair of terminals of thermistor 24 by soldering. The other hand, each large portion 261b of conductive foils 261 is connected to a pair of one terminals of lead wires 223 by soldering. Accordingly, thermal resistance between thermistor 24 and lead wires 223 is increased without decreasing electric resistance therebetween due to providing small area portion 261c which is relatively smaller than large area portions 261a, 261b. Besides, effective heat exchange between the air in passage 212 and lead wires 223 exposed in the rear side space of instrument panel 30 due to providing large area portion 261b. In result, thermistor 24 can sense temperature of the air in passage 212 without unnecessary thermal influence from lead wires 223.

## Claims

1. In a thermosensor (20) used for an automotive air conditioning system comprising a casing (21), a thermo-detecting element (24) and a circuit board (23), said casing including a passage (212) through which air flows and a fan (221) drawing air from an outside of said casing to said passage, said thermo-detecting element (24) disposed within said passage, said circuit board (23) coupling a terminal of said thermo-detecting element (24) to one end terminal of a lead wire of which another terminal connects to a controlling apparatus of the automotive air conditioning system and comprising a conductive member disposed on one surface thereof, the improvement comprising: said circuit board (23) being disposed at said casing to expose at least said one surface thereof to air in said passage.

2. The thermosensor of claim 1 said conductive member of said circuit board (23) including a pair of portions which are extended on said one surface of said circuit board, said each extended portion of said conductive member being connected to said terminal of said thermo-detecting element (24) and said one end terminal of said lead wire respectively, said each extended portion of said conductive member being connected by a narrowed conductive member.

3. Thermosensor of claim 1 said thermo-detecting member (24) is a thermistor.

Fig 1

Fig. 2

Fig. 3

211a  21  20  221  211a

24

211a  23

223

212  21  211  20  221  22

24

23

212a  211a

223

222

EP 0 334 234 A2

Fig. 4

EP 0 334 234 A2

Fig. 5

Fig. 6